# EUROPEAN PATENT APPLICATION

(11) **EP 4 553 730 A1**
(43) Date of publication of application: **14.05.2025**
(21) Application number: 24211729.9
(22) Date of filing: 08.11.2024
(51) Int. Cl.: G06Q 10/20, H04W 4/40, H04L 67/12, H04W 4/50

(54) **ONBOARD MAINTENANCE SYSTEM CONFIGURATION GENERATION**

(30) Priority: 10.11.2023 US 202363597854 P
(71) Applicant: GE Aviation Systems Limited, Bishops Cleeve Cheltenham Gloucestershire GL52 8SF (GB)
(72) Inventor: MISENHEIMER, Steven Lane, Traverse City (US); DUSSEAU, Michael, Grandville (US); DUNNING, Paul Michael, Southampton (GB)
(74) Representative: Openshaw & Co.

(57) **Abstract**

Systems (100), methods (300), and other embodiments described herein relate to developing a comprehensive set of rules for evaluating the health of an aircraft system. In one embodiment, a method (300) includes receiving (310) text from one or more sources. Each of the one or more sources describes operation of at least a portion of a system. The method (300) includes generating (320), using at least one natural language processing model, one or more sets of rules based on the text. The method (300) includes generating (330), using at least one generative model, one or more formatted sets of rules based on at least the one or more sets of rules and a selected format. The method (300) also includes outputting (340) at least a portion of the one or more formatted sets of rules.

## Description

### TECHNICAL FIELD

The subject matter described herein relates, in general, to systems and methods for developing a comprehensive set of rules for evaluating the health of a system.

### BACKGROUND

A comprehensive set of condition monitoring rules are used to provide health management or onboard maintenance capabilities to systems such as aircraft systems. Systems may include subsystems as well as components from various manufacturers. As such, the format in which the instructions, manuals and guides for the systems, subsystems, and/or components may vary such that the instructions, manuals and guides are difficult and cumbersome for an operator to interpret.

### BRIEF DESCRIPTION OF THE DRAWINGS

The accompanying drawings, which are incorporated in and constitute a part of the specification, illustrate various systems, methods, and other embodiments of the disclosure. It will be appreciated that the illustrated element boundaries (e.g., boxes, groups of boxes, or other shapes) in the figures represent one embodiment of the boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates a data flow of an onboard maintenance system (OMS) configuration generation system.
FIG. 2 illustrates one embodiment of the OMS configuration generation system.
FIG. 3 is a flowchart illustrating one embodiment of a method associated with OMS configuration generation.

### DETAILED DESCRIPTION

Systems, methods, and other embodiments associated with systems and methods for developing a comprehensive set of rules for evaluating the health of a system such as an aircraft system are disclosed.

The health of an aircraft can be determined using an Onboard Maintenance System (OMS). An OMS provides the capability to analyze the overall health of an aircraft system, a subsystem of the aircraft system, and/or a component in the subsystem or aircraft system. The OMS may be utilized by an operator for various operations such as central maintenance, asset management, and aircraft condition monitoring. For central maintenance, the OMS may be used to report failures, isolate faults, and/or diagnose faults. For asset management, the OMS may be used for software loading, configuration reporting, and/or time-on-wing reporting. For aircraft condition monitoring, the OMS may be used for full flight data recording, configurable analytics, and/or automatic wired or wireless data offload. In general, the OMS may be used to determine the health status of the aircraft system, the configuration being utilized on the aircraft system, the built-in tests being performed on the aircraft, and may be used for software loading and updates.

As an example, the configuration is a complex database that consists of a set of interlinked files with integrity checks to ensure the completeness and appropriateness of the set of files. The database may be updated in part or completely and the OMS ensures that the overall content of the database is properly configured. If an error occurs within the database, the OMS may declare a fault/failure within itself, triggering a maintenance action. Configuration tools on the ground may be used to build a loadable database and may further provide validity testing to ensure that the database is valid when created.

As an example, the OMS database may include three files, each with a version number. During an update, the OMS may perform a version number check to ensure the most suitable versions of the data files are being utilized. In such an example, the OMS database may have previously included three files - file 1 being File 1 version 1.1, file 2 being File 2 version 1.1, and file 3 being File 3 version 1.1. A new OMS database with three files, file 1 still being File 1 version 1.1, file 2 being File 2 version 1.2, and file 3 still being File 3 version 1.1., may be loaded into the aircraft. The OMS may version check the three files in the new OMS database and upon identifying that the version of file 2 has changed, the OMS may unpack and update file 2, then use the resulting configuration for maintenance operation.

OMS technologies significantly improve the maintenance practices related to aircraft such as correctly identifying critical issues early and in a timely manner. Systems in an aircraft may be sourced from different suppliers. However, aircraft operator have to understand how each of the systems, subsystems, and components within the aircraft operate. Aircraft operators may have different priorities which may lead to prioritizing maintenance in different ways. As an example, different aircraft industries prioritize maintenance differently. In such an example, Private Business Jets prioritize guaranteed availability to a flight on a custom schedule, airlines prioritize adherence to a published schedule without disruption due to maintenance, and military aircraft prioritize operational availability over down time for maintenance. The technology disclosed here may provide customization such that all three of these industries have more coverage of their priorities using more data types.

An aircraft system may include various systems, subsystems, and/or components. These systems, subsystems, and components may be manufactured by various entities at various times. As such, the instructions, manuals, and guides for operating these systems, subsystems, and components may vary in format based on, as an example, the manufacturer and/or the time of manufacture.

Currently, a significant amount of time and labor is being spent reviewing various manuals and guides, extracting relevant information, and developing a comprehensive set of rules known as the OMS configuration. The OMS is configured using the OMS configuration and is able to run tests and other tasks to evaluate the health of the aircraft based on the OMS configuration.

Accordingly, systems, methods, and other embodiments associated with developing a comprehensive set of rules for evaluating the health of a system are disclosed. Other embodiments may include a non-transitory computer-readable medium that includes instructions for developing a comprehensive set of rules for evaluating the health of a system. As previously mentioned, the comprehensive set of rules are used to configure the OMS and is known as the OMS configuration. The OMS configuration generation system disclosed may develop the OMS configuration based on text from various sources, including manuals available in digital form and in physical form, as well as preexisting OMS configuration(s). The OMS configuration generation system may include one or more generative models, such as a natural language processor and an OMS configuration generator. The OMS configuration generation system may digitally capture manual(s), such as a fault isolation manual for an aircraft or aircraft system(s) and may feed the text of the manual(s) to the natural language processor. The natural language processor may generate a set of rules, such as condition monitoring rules and fault isolation logic based on text and logic related to the text from the manual(s). The OMS configuration generation system may then feed the set(s) of rules from the natural language processor(s) to the OMS configuration generator. The OMS configuration generator may generate a comprehensive set of formatted rules based on the set(s) of rules received from the natural language processor(s) and the formats that are compatible with the OMS and health evaluation process. The OMS configuration generation system may then output the comprehensive set of formatted rules to the OMS. As an example, the OMS configuration generation system may populate a database with the comprehensive set of rules, and the database may be accessible to the OMS.

In general, the OMS configuration generation system may be used for the development of logic-based rule sets from digitized human language data sources through the use of natural language processor.

More generally, the system disclosed may be an onboard maintenance system, an offboard maintenance system, or a combination of an onboard maintenance system and offboard maintenance system. An onboard maintenance system analyses the health of an aircraft based on resident aircraft data and condition-based rules and provides results relating to the health of the aircraft to a user such as an operator or personnel. An offboard maintenance system analyses the health of the aircraft based on data transfers from onboard the aircraft real time, streamed data, or post flight and the associated condition-based rules.

The embodiments disclosed herein present various advantages over current methods. First, the embodiments may be used for systems with subsystems and/or components that do not have a standard format across the systems, the subsystems, and the components. As an example, this system may be used by legacy aircraft, aircraft with legacy systems, and any other aircraft with systems that have non-conforming formats. Second, the embodiments eliminate extensive engineering hours developing rule sets for retrofitting OMS evaluating the health of older aircraft; thus, reducing the maintenance cost of older aircraft and extending the life of older aircraft. In general, the cost of retrofitting a system with one or more non-confirming formats is reduced. Third, the embodiments reduce expenditure of time and resources. Fourth, the embodiments improve the accuracy of the OMS and reduce probability of human error. Fifth, the embodiments encourage more complete, comprehensive, and robust testing of the systems, the subsystems, and the components within. Sixth, the embodiments provide rules that are based on a combination of events occurring at various components and/or systems within the aircraft. As an example, these rules may assist a user in identifying the component(s) or system(s) with fault(s) when there is a multi-system breakdown in the aircraft. As such, cross system analysis of various systems, subsystems, and components within the aircraft is beneficial for accurately identifying and resolving a fault in a timely manner.

Detailed embodiments are disclosed herein; however, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in the figures, but the embodiments are not limited to the illustrated structure or application.

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details.

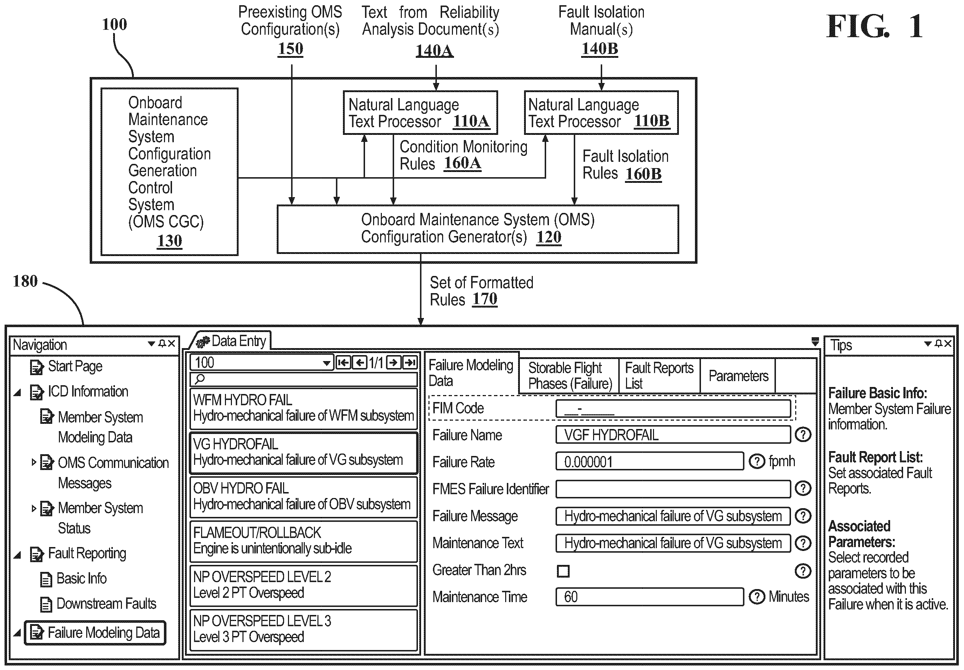

FIG. 1 illustrates a data flow of an onboard maintenance system (OMS) configuration generation system 100. The OMS configuration generation system 100 generates a comprehensive set of rules used for configuring the OMS that is evaluating the health of a system. The OMS configuration generation system 100 may include various elements, which may be communicatively linked in any suitable form. As an example, the elements may be connected, as shown in FIG. 1. Some of the possible elements of the OMS configuration generation system 100 are shown in FIG. 1 and will now be described. It will be understood that it is not necessary for the OMS configuration generation system 100 to have all the elements shown in FIG. 1 or described herein. The OMS configuration generation system 100 may have any combination of the various elements shown in FIG. 1. Further, the OMS configuration generation system 100 may have additional elements to those shown in FIG. 1. In some arrangements, the OMS configuration generation system 100 may not include one or more of the elements shown in FIG. 1.

The OMS configuration generation system 100 includes one or more natural language processors 110A, 110B (collectively known as 110), one or more OMS configuration generators 120, and one or more OMS configuration generation control (OMS CGC) systems 130. The natural language processor(s) 110 and the OMS configuration generator(s) 120 may be any suitable machine learning models. The natural language processor 110, also known as a natural language processing model, is a generative model. Generative models are a class of machine learning models that can generate new data based on training data. data. Artificial Intelligence (AI) training is a standard method of creating a model such as a generative model that represents "intelligence" by providing the model with a portion of an input data set. The model receives and processes the input data set, i.e., the "training data", and compare the AI results with human generated results. Based on the results of the comparison, the model is updated until performance of the model is on a par with the human "ground truth". Once the model is trained, the model is fed more data to confirm the processed results are consistent with a human assessed version. Models are frequently re-trained over time as new information types are added. Training of the model may be performed off-aircraft where the Configuration Generation tool exists.

As an example, the natural language processor 110 is capable of analyzing and understanding human language and generating human-like text. The training data may include human-like text and more specifically, text from manuals such as operating manuals, and maintenance manuals. In this example, the natural language processor 110 is trained on human-like text such as manuals, and is then capable of receiving text 140A, 140B (collectively known as 140) from one or more sources that describe the operation of at least a portion of a system. The natural language processor 110 is also capable of generating one or more sets of rules 160A, 160B (collectively known as 160) based on the text 140. In some embodiments, a single natural language processor 110 may receive texts 140 from various sources and output multiple sets of rules 160 relating to the various sources. In other embodiments, a single natural language processor 110 may receive text 140 from a single source and output a set of rules 160 relating to the single source. As such, the OMS configuration generation system 100 may include one or more natural language processors 110.

As previously mentioned, the sources describe the operation of at least a portion of the system. As an example, the sources may include one or more manuals for operating the system and/or at least a portion of the system. In one or more embodiments, the system may be an aircraft system. The aircraft systems may be integral to the operation of the aircraft. As such, the health of the aircraft depends on the health, status, and/or condition(s) of the aircraft systems within the aircraft. A portion of the aircraft system may include components and/or subsystems within the aircraft system, such as flight control systems, engine control systems, fuel systems, electrical systems, pneumatic systems, hydraulic systems, landing gear systems, and/or avionics technology. Components such as resistors, capacitors, connectors, air data probes, as well as systems such as Air Data Computers, OMS, Navigation computers, flaps, ailerons, oil pumps, engines are designed with the intent to understand the safety. The design includes how the components and/or systems fail (which may be referred to as a "failure modes"), the impact of failures (which may be referred to as "effects") and the importance of the impact of failures on safety. As an example, an LED light may fail because of a fault in an electronic control. The impact (or the effect) of the LED light failing is that an indicator light does not turn on. However, the criticality of the indicator light not turning on differs depending on whether the indicator light signaled that a coffee pot is on or an "Autopilot Failed" had occurred.

The sources may include manuals for operating the subsystems and/or components within the subsystems. In more detail, the manual(s) may include information about, as an example, fault isolation, maintenance, interface control, requirements, design, reliability analysis, failure mode effect and criticality analysis (FMECA) for the respective systems, subsystems and/or components. FMECA data is based on detailed analysis, applies to well-known critical systems such an aircraft, and may be a source of data that is directly related to OMS functionality. Further, in a case where the aircraft experiences a failure, the failure may be based on one or more of the subsystems and/or the components within the subsystems. In such an example, the manual(s) may include information about how to identify and isolate the fault(s) and/or the subsystem(s) or component experiencing the fault. The manual(s) may also include steps to rectify the fault.

The sources may be digital documents or soft copies such as Microsoft Word documents or Adobe Portable Document Format (PDF) documents. Additionally, and/or alternatively, the sources may be physical documents or hard copies such as paper documents or prints. In the case where the source is a physical document, the OMS configuration generation system 100 may include a sensor such as a scanner that is capable of scanning the physical document and generating a digital version of the physical document. The contents of the sources may include processes such as the logic for fault isolation in the system(s), the subsystem(s), and/or the component(s). The contents of the sources may include text in natural language, in machine code, or in any other machine-readable data format.

Upon receiving text 140 from the sources, the natural language processor 110 generates a set of rules 160, such as condition monitoring rules 160A and fault isolation rules 160B based on the text 140. In other words, the natural language processor 110 receives the text 140, determines a digital representation of the logic associated with the text 140, and then converts the logic into rules 160, such as fault isolation rules 160B and/or condition monitoring rules 160A.

The condition monitoring rules 160A inform a user and/or an automated system such as the OMS on the rules to be followed and the logic to be implemented so as to sample, monitor, and record information and parameters for the system(s), subsystem(s), and component(s). The fault isolation rules 160B inform the user and/or the system, such as the OMS on the rules to be followed and the logic to be implemented so as to identify a fault and isolate the system, subsystem, and/or component causing the fault or the error.

As previously mentioned, the OMS configuration generation system 100 includes one or more OMS configuration generators 120. The OMS configuration generator 120 receives the rules 160 from the natural language processor(s) 110. As an example and as previously mentioned, the rules 160 may include fault isolation rules 160B and/or condition monitoring rules 160A for various systems, subsystems, and/or components. The OMS configuration generator(s) 120 then generates a set of formatted rules 170 to be included in an OMS configuration 180. The OMS configuration 180 may include rules such as system configuration and maintenance rules. The set of formatted rules 170 and the OMS configuration 180 may be in any suitable format. As an example, the set of formatted rules 170 and the OMS configuration 180 may be arranged in a format or layout that is easy for a user to understand and utilize. As another example, the set of formatted rules 170 and the OMS configuration 180 may be arranged in a format or layout that is machine-readable such that an automated system can capture the rules, analyze the rules, and perform an action based on the rules. In such an example, the set of formatted rules 170 and the OMS configuration 180 may be formatted such that the automated system may populate a user interface with the information, e.g., the rules 170 in the OMS configuration 180. The set of formatted rules 170 and the OMS configuration 180 may be stored in a database and the automated system may access the database and populate the user interface based on the information in the database. The database may be generated and populated within the aircraft or outside and off the aircraft. The database may be updated at any suitable time. In a case where the database is generated outside and off the aircraft, when the generation and population of the database is complete, the database may be loaded onto the aircraft as a controlled item.

As previously mentioned, the OMS configuration generator 120 may be a generative model that is capable of receiving the rules 160 from multiple sources, reformatting the rules 160, and combining the rules 160 into a comprehensive set of formatted rules 170.

In one example, the OMS configuration generator 120 may receive rules 160 from one or more natural language processors 110. The OMS configuration generator 120 may also receive rules from preexisting OMS configurations 150. The OMS configuration generator 120 may output the comprehensive set of rules 170 in a predetermined format. As an example, the OMS configuration generator 120 may select the predetermined format based on at least one of the texts 140 being fed into the natural language processor(s) 110. In such an example, the OMS configuration generator 120 may receive and analyze the text 140 and/or the rules 160 from the natural language processor(s) 110 to determine the format in which to arrange the rules 160. The OMS configuration generator(s) 120 may then output the formatted rules 170 based on the format. As another example, the OMS configuration generator 120 may select the predetermined format based on user input. In such an example, the OMS configuration generator 120 may receive user input that includes a preferred format. The OMS configuration generator 120 may then arrange and output the rules 170 based on the preferred format. As another example, the OMS configuration generator 120 may select the predetermined format based on historical information. In such an example, the OMS configuration generator 120 may emulate a format in a preexisting OMS configuration 150. The OMS configuration generator 120 may receive and analyze the preexisting OMS configuration 150. The OMS configuration generator 120 may then determine a format within the preexisting OMS configuration 150 and apply the format while outputting the formatted rules 170. As another example, the OMS configuration generator 120 may select the predetermined format based on machine-readable information. In such an example, the OMS configuration generator 120 may request and receive the machine-readable information from an existing database. The machine-readable information may be in a variety of formats such as an html format and/or text format.

The OMS configuration generator 120 may receive one or more sets of rules 160 from the natural language processor(s) 110 and/or preexisting OMS configuration 150, and the OMS configuration generator 120 may utilize a variety of large language models and/or machine learning methods to output a comprehensive set of the rules based on the received rules 160 and the predetermined format.

As previously mentioned, the OMS configuration generation system 100 includes one or more OMS configuration generation control (OMS CGC) systems 130. The OMS CGC system may control the one or more natural language processors 110, the one or more OMS configuration generators 120, and any other components within the OMS configuration generation system 100. The OMS CGC system 130 is described in detail below.

As an example and as shown in FIG. 1, the OMS configuration generation system 100 includes two natural language processors 110A, 110B , an OMS configuration generator 120, and an OMS CGC system 130. The inputs into the OMS configuration generation system 100 include published information disclosing the operation of a system such as an aircraft system, a subsystem of an aircraft system, and/or a component within the aircraft system. As an example, the inputs may include a reliability analysis document 140A for an aircraft engine, a fault isolation manual 140B for an aircraft braking system, and a preexisting OMS configuration 150 for the aircraft system. The inputs into the OMS configuration generation system 100 may include any suitable combination of published documents 140 and/or preexisting OMS configurations 150.

The OMS CGC system 130 may activate the natural language processors 110, the OMS configuration generator(s) 120, and any other components. The OMS CGC system 130 may select a portion of the published documents 140 and/or preexisting OMS configurations 150 to be inputted into the natural language processors 110 and the OMS configuration generator(s) 120, respectively. The OMS CGC system 130 may further select the format in that the OMS configuration generator(s) 120 outputs the formatted rules 170.

The two natural language processors 110 include a first natural language processor 110A and a second natural language processor 110B. As an example, the first natural language processor 110A is receiving text in the reliability analysis document 140A. The first natural language processor 110A analyzes the text 140A, extracts the rules and logic disclosed in the text 140A, and generates the condition monitoring rules 160A based on the extracted rules and logic. The second natural language processor 110B is receiving text in the fault isolation manual for an aircraft braking system 140B. The second natural language processor 110B analyzes the text 140B, extracts the rules and logic disclosed in the text 140B, and generates the fault isolation rules 160B based on the extracted rules and logic.

The OMS configuration generator 120 receives the condition monitoring rules 160A, the fault isolation rules 160B, and the preexisting OMS configuration 150. The OMS configuration generator 120 may determine the format for outputting the rules 170 based on at least one of the texts 140, user input, historical information such as preexisting OMS configurations 150, and/or machine-readable information. The OMS configuration generator 120 generates a comprehensive set of rules 170 which includes the condition monitoring rules for the aircraft engine, the fault isolation rules for the braking system, and various other rules relating to other systems, subsystems, and/or components, some of which may be in the preexisting OMS configuration 150. The OMS configuration generator 120 may output the comprehensive set of rules 170 to a data storage unit such as a database.

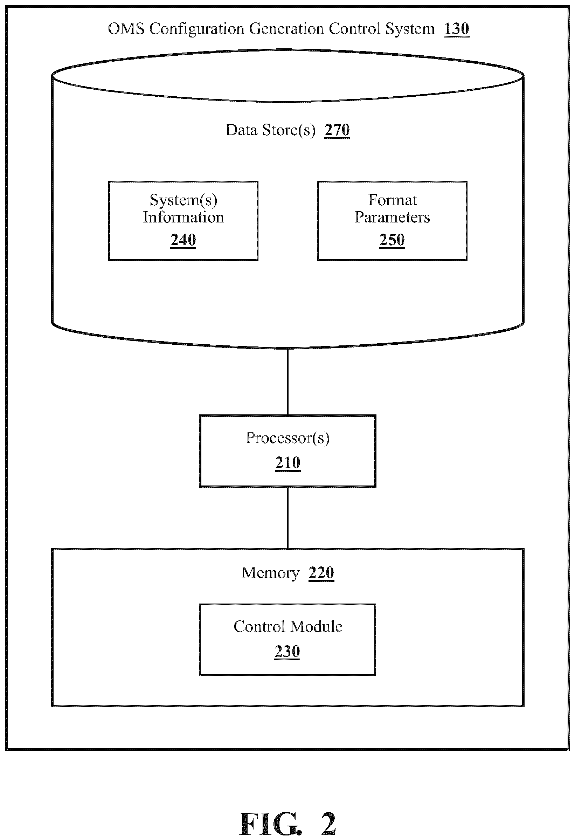

With reference to FIG. 2, one embodiment of the OMS CGC system 130 of FIG. 1 is further illustrated. The OMS CGC system 130 is shown as including a processor 210. Accordingly, the processor 210 may be a part of the OMS CGC system 130, or the OMS CGC system 130 may access the processor 210 through a data bus or another communication path. In one or more embodiments, the processor 210 is an application-specific integrated circuit (ASIC) that is configured to implement functions associated with a control module 230. In general, the processor 210 is an electronic processor, such as a microprocessor, that is capable of performing various functions as described herein.

In one embodiment, the OMS CGC system 130 includes a memory 220 that stores the control module 230 and/or other modules that may function in support of developing a comprehensive set of rules for evaluating the health of a system. The memory 220 is a random-access memory (RAM), read-only memory (ROM), a hard disk drive, a flash memory, or another suitable memory for storing the control module 230. The control module 230 is, for example, machine-readable instructions that, when executed by the processor 210, cause the processor 210 to perform the various functions disclosed herein. In further arrangements, the control module 230 is a logic, integrated circuit, or another device for performing the noted functions that include the instructions integrated therein.

Furthermore, in one embodiment, the OMS CGC system 130 includes a data store 270. The data store 270 is, in one arrangement, an electronic data structure stored in the memory 220 or another data store, and that is configured with routines that can be executed by the processor 210 for analyzing stored data, providing stored data, organizing stored data, and so on. Thus, in one embodiment, the data store 270 stores data used by the control module 230 in executing various functions.

For example, as depicted in FIG. 2, the data store 270 includes systems information 240 and the format parameters 250, along with, for example, other information that is used and/or produced by the control module 230.

As previously mentioned, the system may include various systems, subsystems, and/or components. The systems information 240 may include information in relation to the system as well as the various systems, subsystems, and/or components. As an example, the systems information 240 may include identifying information such as the brand, the type, the model number, the year of manufacture, and/or the version number of the systems, the subsystems, and/or the components. The systems information 240 may inputted by a user. Additionally and/or alternatively, the systems information 240 may be retrieved from a parts database.

The format parameters 250 may include information about the format of the rules 170 in the OMS configuration. The format parameters 250 may be based on user preference and user interface, the related systems, subsystems and/or components, and/or a preexisting OMS configuration format.

While the OMS CGC system 130 is illustrated as including the various data elements, it should be appreciated that one or more of the illustrated data elements may not be included within the data store 270 in various implementations and may be included in a data store that is external to the OMS CGC system 130. In any case, the OMS CGC system 130 stores various data elements in the data store 270 to support functions of the control module 230.

In one embodiment, the control module 230 includes instructions that, when executed by the processor(s) 210, cause the processor(s) 210 to receive text 140 from one or more sources. As previously disclosed, the one or more sources may describe the operation of at least a portion of a system. At least a portion of the system may refer to a whole system, a portion of the whole system, a subsystem within the whole system, and/or a component within the whole system and/or the subsystem.

Operation of at least the portion of the system may be related to fault isolation, maintenance, interface control, requirements, design, reliability analysis, and/or failure mode effect and criticality analysis (FMECA). Fault isolation includes monitoring a system, identifying when a fault occurs within the system, and identifying the type and location of the fault. Maintenance may include preventive maintenance and/or corrective maintenance. Preventative maintenance refers to processes for keeping a system in a functioning state while corrective maintenance refers to processes for identifying a need for replacement and/or repair, replacing, and/or repairing a system prior to a failure of the system. Interface control refers to the connectivity between the systems, subsystems, and components. Interface control may include the messaging protocol between systems, subsystems, and/or components. As such, the interface control may disclose the type of messaging and/or the message format to be used for data transfer between the systems, subsystems, and/or components. Requirements refer to how a system functions or is expected to function. Design refers to how the system is designed and/or implemented. Reliability analysis refers to evaluation of the system to determine whether the system provides consistent results and thus, the system can be considered reliable. The FMECA method can be utilized during reliability analysis. FMECA is a process of reviewing systems, subsystems, and/or components to identify potential failure modes as well as the cause and effect of the potential failure modes. FMECA also includes determining a relationship between the probability of the occurrence of a failure mode and the severity of the occurrence.

In one embodiment, the system may be an aircraft system and/or a portion of an aircraft system. In such an embodiment, the system may include flight control systems, engine control systems, fuel systems, hydraulic systems, electrical systems, pneumatic systems, environmental control systems, emergency systems, rotary wing systems, advanced systems, and/or avionics technology. Each system may contribute to the operation of the aircraft. In a case of a failure within the aircraft, the failure may be attributed to one or more of the systems within the aircraft. In other words, a failure within one or more of the aircraft systems may lead to a failure of at least a portion of the aircraft. Further, there may be a co-dependency between systems such that, as an example, a failure in the engine control system may originate from a failure or fault in the fuel system. As such, a failure in the aircraft that may appear to be in the engine control system may be due to a fault in the fuel system.

The one or more sources may include documents, manuals, and/or guides describing the operation of the systems, the subsystems, and/or the components within the systems or subsystems. As such, and as an example, the sources may include a fault isolation manual, a maintenance manual, an interface control document, a requirements manual, a design document, a reliability analysis document, and/or a FMECA document for the systems, subsystems, or components with the systems and subsystems. The sources may be a combination of digital documents and physical documents. In some embodiments, the OMS configuration generation system 100 may include a scanner for converting the contents of the physical documents into digital documents.

The sources may further include preexisting OMS configurations 150. The preexisting OMS configurations 150 may be human-generated and/or machine-generated. The control module 230 may activate the natural language processor(s) 110 to receive the text 140. Additionally, the control module 230 may activate the OMS CGC system 130 to receive preexisting OMS configurations 150.

In one embodiment, the control module 230 includes instructions that, when executed by the processor(s) 210, cause the processor(s) 210 to generate, using at least one natural language processor 110, one or more sets of rules 160 based on the text 140. The control module 230 may activate the natural language processor(s) 110 to generate one or more sets of rules 160 based on the text 140 the natural language processor 110 receives. As previously disclosed, the natural language processor(s) 110 may utilize various methods such as any suitable machine learning methods and/or large language model learning processes to generate the sets of rules 160. The natural language processor 110 may output the sets of rules 160 to the OMS configuration generator(s) 120.

In one embodiment, the control module 230 includes instructions that, when executed by the processor(s) 210, cause the processor(s) 210 to generate, using at least one generative model, one or more sets of formatted rules 170 based on at least the one or more sets of rules 160, a relationship between the one or more sets of rules, and a selected format. The control module 230 may activate a generative model to receive the sets of rules 160 generated by the natural language processor(s) 110. The control module 230 may also activate the generative model to receive the sets of rules from preexisting OMS configurations 150. An example of the generative model is the OMS configuration generator 120, which has been described above. In some embodiments, the control module 230 may utilize the generative model or a second generative model to generate a set of relationships between the one or more sets of rules. The set of relationships refers to how two or more aircraft systems are related and/or co-dependent. In other words, a failure in one aircraft system may be caused by a failure in another aircraft system. As an example, the generative model may be trained on data including relationships between aircraft systems as well as historical information. The generative model may receive a first set of rules relating to a flight control system and a second set of rules relating to an engine control system. The control module may then activate the generative model to generate a set of relationships between the first set of rules and the second set of rules. As an example, the set of relationships may include faults within a first system associated with the first set of rules that may lead to faults or failures in a second system associated with the second set of rules. The set of relationships may include combinations of conditions, faults, failures, and resolutions for multiple aircraft systems.

In some embodiments, the control module 230 may determine the selected format. As an example, the control module 230 may determine the selected format based on the contents of the text, user input, historical information such as the format of the preexisting OMS configurations 150, and/or machine-readable information. Upon selecting a format, the control module 230 may activate the OMS configuration generator 120 to generate one or more sets of formatted rules 170 based on the sets of rules 160 the OMS configuration generator 120 receives, a relationship between the one or more sets of rules, and the selected format. Additionally and/or alternatively, the control module 230 may activate the OMS configuration generator 120 to generate one or more sets of formatted rules 170 which may include previously processed sets of rules from the preexisting OMS configuration(s) 150. In some embodiments, the control module 230 may select different formats for different sets of rules 170. As such, the OMS configuration generator 120 may format the different sets of rules 170 according to the respective selected format. The OMS configuration generator 120 may then combine the different sets of rules as well as the relationships between the rules and related systems into a comprehensive set of rules 170 that make up the OMS configuration. The comprehensive set of rules 170 may then be loaded onto an aircraft OMS system.

In one embodiment, the control module 230 includes instructions that, when executed by the processor(s) 210, cause the processor(s) 210 to output at least a portion of the one or more sets of formatted rules 170 to an aircraft maintenance system. The aircraft maintenance system may be used for performing aircraft maintenance such as monitoring the status and conditions of systems, subsystems, and/or components within the aircraft. The aircraft maintenance system may also monitor for failures and faults in the systems, subsystems, and/or components within the aircraft. Even further, the aircraft maintenance system may identify and resolve faults and failures of the systems, subsystems, and/or components within the aircraft. As previously mentioned, the aircraft maintenance system may include an on-board aircraft maintenance system and/or an off-board aircraft maintenance system.

The control module 230 may output the set of formatted rules in any suitable digital format such as a digital file, text file, or spreadsheet. The control module 230 may transmit the set of formatted rules electronically and/or may display the set of formatted rules such that the set of formatted rules are visible and viewable by a human user or operator. The control module 230 may cause the OMS configuration generator 120 to output all the sets of rules 160 that the OMS configuration generator 120 received. Alternatively, the control module 230 may cause the OMS configuration generator 120 to output a portion of the sets of rules 160 that the OMS configuration generator 120 received.

As an example, in a case where a health evaluation is being performed on a portion of the system, subsystem, and/or components, there may not be a need for a complete set of the rules. In such an example, the set of rules pertaining to the portion of the system, the subsystem, and/or the components may be the only set of rules required by and output to the OMS. As another example, in a case where an evaluation relating to a specific issue is being performed on the portion of the system, subsystem, and/or components, there may not be a need for a complete set of the rules. In such an example, the portion of the set of rules pertaining to the specific issue may be the only set of rules required by and output to the OMS. As an example, the portion of the set of rules may include a process for monitoring a condition in the system, subsystems, or component(s), a process for isolating a fault in the system, subsystems, or component(s), a process for diagnosing a fault in the system, subsystems, or component(s), reporting a fault in the system, subsystems, or component(s), and/or a process for interfacing with the system, subsystems or component(s). In some embodiments, the OMS interrogate the system reporting a fault, requesting additional information. As an example, the additional information may include a software part number, a system serial number, and/or operating hours.

The control module 230 may select the portion of the sets of rules based on predetermined criteria. As an example, the control module 230 may receive user input, machine generated input, and/or an automated input indicating the portion of the system, subsystem, and/or component that is to have a health evaluation and/or the type of evaluation. As such, the predetermined criteria may be based on user input, machine generated input, and/or an automated input. The control module 230 may utilize one or more various methods to identify the set of rules required based on the portion of the system, subsystem, and/or component and/or the type of evaluation to be performed. As an example, the control module 230 may utilize a machine learning process or a large language model method to determine and select the sets of rules to output to the OMS. The control module 230 may utilize a lookup table or one or more various algorithms to determine and select the sets of rules 170 to output to the OMS.

As an example, the control module 230 may select the text 140 or the sources fed into the natural language processor 110 based on the type of tests the OMS intends to perform. As another example, the control module 230 may select the sets of rules 160 that are inputted into the OMS configuration generator 120. As an example, the control module 230 may retrieve information from the OMS indicating the type of tests the OMS intends to perform and the control module 230 may utilize one or more methods such as machine learning, large language models, look up tables, algorithms, and/or formulae to identify the sets of rules relating to the type of tests. As such, OMS configuration generator 120 may output a comprehensive set of rules 170 that include a selected set of rules based on the tests the OMS intends to perform.

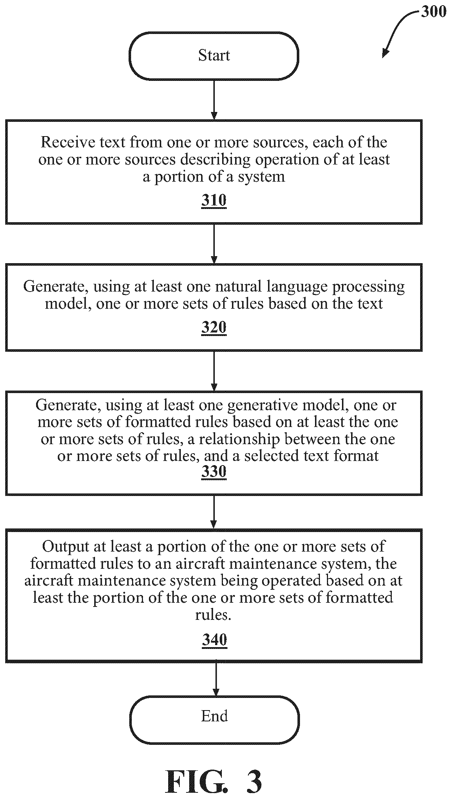

FIG. 3 is a flowchart illustrating one embodiment of a method 300 associated with OMS configuration generation. The method 300 will be described from the viewpoint of the OMS CGC system 130 of FIGS. 1-2. However, the method 300 may be adapted to be executed in any one of several different situations and not necessarily by the OMS CGC system 130 of FIGS. 1-2.

At step 310, the control module 230 may cause the processor(s) 210 to receive text 140 from one or more sources. As previously mentioned, each of the sources may describe the operation of a system, a subsystem, and a component. More specifically, the control module 230 may activate the natural language processor(s) 110 and feed the text 140 from the sources to the natural language processor(s) 110. In a case where a source is a physical document, the control module 230 may activate a scanner to convert the physical document to a digital document. In some embodiments, the control module 230 may feed all of the text 140 in the sources to the natural language processor(s) 110. In some embodiments, the control module 230 may select portions of the text 140 and feed the selected portions of the text 140 to the natural language processor(s) 110. The control module 230 may utilize one or more methods to determine the selected portions of the text 140. As an example, the control module 230 may receive information from a user. As another example, the control module 230 may receive information from the OMS, indicating the type of tests the OMS intends to perform.

The sources may include preexisting OMS configurations 150. As such, the control module 230 may activate the natural language processor(s) 110 and/or the OMS configuration generator 120 and feed the preexisting OMS configuration to the natural language processor(s) 110 and/or the OMS configuration generator 120.

At step 320, the control module 230 may cause the processor(s) 210 to generate, using at least one natural language processing model 110, one or more sets of rules 160 based on the text 140. As such, the natural language processor(s) 110 may generate sets of rules 160 based on the text 140. The sets of rules 160 describe the operation of a system such as an aircraft system, a subsystem within the aircraft system, and/or a component within the aircraft system.

At step 330, the control module 230 may cause the processor(s) 210 to generate, using at least one generative model 120, one or more sets of formatted rules 170 based on at least the one or more sets of rules 160, a relationship between the one or more sets of rules, and a selected format. The control module 230 may activate a generative model such as the OMS configuration generator 120. The control module 230 may feed the sets of rules 160 from the natural language processor(s) 110 and/or the preexisting OMS configuration 150 to the OMS configuration generator 120. The control module 230 may activate a second generative model that determines a relationship between the rules relating to the multiple systems, subsystems, and/or components. The second generative model may be trained on historical data including previously existing relationships. The second generative model may be applied to the one or more rules 160 to generate a set of relationships between the one or more sets of rules. The control module 230 may determine one or more formats for the output from the OMS configuration generator 120 based on methods disclosed above. The OMS configuration generator 120 may format the sets of rules 170 based on the selected format(s). The set of formatted rules 170 may include the one or more sets of rules 170 and information relating to relationships between the one or more sets of rules 170.

At step 340, the control module 230 may cause the processor(s) 210 to output at least a portion of the one or more sets of formatted rules 170. The OMS configuration generator 120 may then output the sets of formatted rules 170 to the OMS. The OMS configuration generator 120 may output the sets of formatted rules 170 to a database accessible by the OMS. More generally, the control module 230 may output the at least a portion of the one or more sets of formatted rules to an aircraft maintenance system. The aircraft maintenance system may include the OMS. The aircraft maintenance system, as described above, monitors the status, conditions, and overall health of the aircraft as well as the systems, subsystems, and components in the aircraft. The aircraft maintenance system also resolves failures and faults within the aircraft, the systems, subsystems, and components within the aircraft.

Detailed embodiments are disclosed herein. However, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in FIGS. 1-3, but the embodiments are not limited to the illustrated structure or application.

The flowcharts and block diagrams in the figures illustrate the architecture, functionality, and operation of possible implementations of systems, methods, and computer program products according to various embodiments. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

The systems, components and/or processes described above can be realized in hardware or a combination of hardware and software and can be realized in a centralized fashion in one processing system or in a distributed fashion where different elements are spread across several interconnected processing systems. Any kind of processing system or another apparatus adapted for carrying out the methods described herein is suited. A typical combination of hardware and software can be a processing system with computer-usable program code that, when being loaded and executed, controls the processing system such that it carries out the methods described herein. The systems, components and/or processes also can be embedded in a computer-readable storage, such as a computer program product or other data programs storage device, readable by a machine, tangibly embodying a program of instructions executable by the machine to perform methods and processes described herein. These elements also can be embedded in an application product which comprises all the features enabling the implementation of the methods described herein and which when loaded in a processing system, is able to carry out these methods.

Furthermore, arrangements described herein may take the form of a computer program product embodied in one or more computer-readable media having computer-readable program code embodied, e.g., stored, thereon. Any combination of one or more computer-readable media may be utilized. The computer-readable medium may be a computer-readable signal medium or a computer-readable storage medium. The phrase "computer-readable storage medium" means a non-transitory storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: a portable computer diskette, a hard disk drive (HDD), a solid-state drive (SSD), a read-only memory (ROM), an erasable programmable read-only memory (EPROM or Flash memory), a portable compact disc read-only memory (CD-ROM), a digital versatile disc (DVD), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Generally, modules, as used herein, include routines, programs, objects, components, data structures, and so on that perform particular tasks or implement particular data types. In further aspects, a memory generally stores the noted modules. The memory associated with a module may be a buffer or cache embedded within a processor, a RAM, a ROM, a flash memory, or another suitable electronic storage medium. In still further aspects, a module as envisioned by the present disclosure is implemented as an application-specific integrated circuit (ASIC), a hardware component of a system on a chip (SoC), as a programmable logic array (PLA), or as another suitable hardware component that is embedded with a defined configuration set (e.g., instructions) for performing the disclosed functions.

Program code embodied on a computer-readable medium may be transmitted using any appropriate medium, including but not limited to wireless, wireline, optical fiber, cable, RF, etc., or any suitable combination of the foregoing. Computer program code for carrying out operations for aspects of the present arrangements may be written in any combination of one or more programming languages, including an object-oriented programming language such as Java^{™}, Smalltalk, C++, or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The phrase "at least one of ... and ...." as used herein refers to and encompasses any and all possible combinations of one or more of the associated listed items. As an example, the phrase "at least one of A, B, and C" includes A only, B only, C only, or any combination thereof (e.g., AB, AC, BC, or ABC).

Aspects herein can be embodied in other forms without departing from the spirit or essential attributes thereof. Accordingly, reference should be made to the following claims, rather than to the foregoing specification, as indicating the scope hereof.

Systems, methods, and other embodiments associated with developing a comprehensive set of rules for evaluating the health of an aircraft as well as systems, subsystems, and components within the aircraft are disclosed. The comprehensive set of rules are used to configure an aircraft maintenance system. The aircraft maintenance system may include one or both of an onboard maintenance system (OMS) and an off-board maintenance system. The OMS configuration generation system may develop the OMS configuration based on text from various sources, including manuals available in digital form and in physical form, as well as preexisting OMS configuration(s). The OMS configuration generation system may include one or more generative models, such as a natural language processor and an OMS configuration generator. The OMS configuration generation system may digitally capture manual(s), such as a fault isolation manual for aircraft or aircraft system(s) and may feed the text of the manual(s) to the natural language processor(s). The natural language processor may generate a set of rules, such as condition monitoring rules and fault isolation logic based on text and logic related to the text from the manual(s). The OMS configuration generation system may then feed the set(s) of rules from the natural language processor(s) to the OMS configuration generator. The OMS configuration generator may generate a comprehensive set of formatted rules based on the set(s) of rules received from the natural language processor(s), a relationship between the sets of rules, and the formats that are compatible with the OMS and health evaluation process. The OMS configuration generation system may then output the comprehensive set of formatted rules to the OMS. As an example, the OMS configuration generation system may populate a database with the comprehensive set of rules, and the database may be accessible to the OMS.

In general, the OMS configuration generation system may be used for the development of logic-based rule sets from digitized human language data sources through the use of natural language processor.

The embodiments disclosed herein present various advantages over current methods. First, the embodiments may be used for systems with subsystems and/or components that do not have a standard format across the systems, the subsystems, and the components. As an example, this system may be used by legacy aircraft, aircraft with legacy systems, and any other aircraft with systems that have non-conforming formats. Second, the embodiments eliminate extensive engineering hours developing rule sets for retrofitting OMS evaluating the health of older aircraft; thus, reducing the maintenance cost of older aircraft and extending the life of older aircraft. In general, the cost of retrofitting a system with one or more non-confirming formats is reduced. Third, the embodiments reduce expenditure of time and resources. Fourth, the embodiments improve the accuracy of the OMS and reduce probability of human error. Fifth, the embodiments encourage more complete, comprehensive, and robust testing of the systems, the subsystems, and the components within. Sixth, the embodiments provide rules that are based on a combination of events occurring at various components and/or systems within the aircraft. As an example, these rules may assist a user in identifying the component(s) or system(s) with fault(s) when there is a multi-system breakdown in the aircraft. As such, cross system analysis of various systems, subsystems, and components within the aircraft is beneficial for accurately identifying and resolving a fault in a timely manner.

Further aspects are provided by the subject matter of the following clauses.

A configuration generation system includes a processor and a memory. The memory stores machine-readable instructions that, when executed by the processor, cause the processor to receive text from one or more sources, each of the one or more sources describing operation of at least a portion of a system; generate, using at least one natural language processing model, one or more sets of rules based on the text; generate, using at least one generative model, one or more sets of formatted rules based on at least the one or more sets of rules, a relationship between the one or more sets of rules, and a selected format; and output at least a portion of the one or more sets of formatted rules to an aircraft maintenance system. The aircraft maintenance system is being operated based on at least the portion of the one or more sets of formatted rules.

The configuration generation system according to any of the preceding clauses, wherein the one or more sets of formatted rules include at least one of: a process for monitoring a condition in the system; a process for isolating a fault in the system; a process for diagnosing a fault in the system; a process for reporting a fault in the system; or a process for interfacing with the system.

The configuration generation system according to any of the preceding clauses, wherein the aircraft maintenance system includes at least one of an on-board aircraft maintenance system and/or an off-board aircraft maintenance system.

The configuration generation system according to any of the preceding clauses, wherein the operation of at least the portion of the system is related to at least one of fault isolation, maintenance, interface control, requirements, design, reliability analysis, or failure mode effect and criticality analysis (FMECA).

The configuration generation system according to any of the preceding clauses, wherein the selected format is based on at least one of the text, user input, historical information, or machine-readable information.

The configuration generation system according to any of the preceding clauses, wherein the machine-readable instructions further include instructions that when executed by the processor cause the processor to select the portion of the one or more sets of formatted rules based on predetermined criteria.

The configuration generation system of according to any of the preceding clauses, wherein the portion of the one or more sets of formatted rules includes one or more previously processed sets of rules.

A method comprises receiving text from one or more sources, each of the one or more sources describing operation of at least a portion of a system; generating, using at least one natural language processing model, one or more sets of rules based on the text; generating, using at least one generative model, one or more sets of formatted rules based on at least the one or more sets of rules, a relationship between the one or more sets of rules, and a selected format; and outputting at least a portion of the one or more sets of formatted rules to an aircraft maintenance system. The aircraft maintenance system is being operated based on at least the portion of the one or more sets of formatted rules.

The method according to any of the preceding clauses, wherein the one or more formatted sets of rules include at least one of: a process for monitoring a condition in the system; a process for isolating a fault in the system; a process for diagnosing a fault in the system; a process for reporting a fault in the system; or a process for interfacing with the system.

The method according to any of the preceding clauses, wherein the aircraft maintenance system includes at least one of an on-board aircraft maintenance system and/or an off-board aircraft maintenance system.

The method according to any of the preceding clauses, wherein the operation of at least the portion of the system is related to at least one of fault isolation, maintenance, interface control, requirements, design, reliability analysis, and failure mode effect and criticality analysis (FMECA).

The method according to any of the preceding clauses, wherein the selected format is based on at least one of the text, user input, historical information, and machine-readable information.

The method according to any of the preceding clauses, further comprises selecting the portion of the one or more formatted sets of rules based on predetermined criteria.

The method according to any of the preceding clauses, wherein the portion of the one or more formatted sets of rules includes one or more previously processed sets of rules.

A non-transitory computer-readable medium includes instructions that when executed by a processor cause the processor to: receive text from one or more sources, each of the one or more sources describing operation of at least a portion of a system; generate, using at least one natural language processing model, one or more sets of rules based on the text; generate, using at least one generative model, one or more sets of formatted rules based on at least the one or more sets of rules, a relationship between the one or more sets of rules, and a selected format; and output at least a portion of the one or more sets of formatted rules to an aircraft maintenance system, the aircraft maintenance system being operated based on at least the portion of the one or more sets of formatted rules.

The non-transitory computer-readable medium according to any of the preceding clauses, wherein the one or more sets of formatted rules include at least one of: a process for monitoring a condition in the system; a process for isolating a fault in the system; a process for diagnosing a fault in the system; a process for reporting a fault in the system; and a process for interfacing with the system.

The non-transitory computer-readable medium according to any of the preceding clauses, wherein the aircraft maintenance system includes at least one of the on-board aircraft maintenance system and/or the off-board aircraft maintenance system.

The non-transitory computer-readable medium according to any of the preceding clauses, wherein at least the portion of the system is related to at least one of fault isolation, maintenance, interface control, requirements, design, reliability analysis, or failure mode effect and criticality analysis (FMECA).

The non-transitory computer-readable medium according to any of the preceding clauses, wherein the selected format is based on at least one of the text, user input, historical information, or machine-readable information.

The non-transitory computer-readable medium according to any of the preceding clauses, wherein the instructions further include instructions that when executed by the processor cause the processor to select the portion of the one or more sets of formatted rules based on predetermined criteria.

## Claims

1. A configuration generation system (100) comprising:
a processor (210); and
a memory (220) storing machine-readable instructions that, when executed by the processor, cause the processor (210) to:
receive text from one or more sources, each of the one or more sources describing operation of at least a portion of a system;
generate, using at least one natural language processing model, one or more sets of rules based on the text;
generate, using at least one generative model, one or more sets of formatted rules based on at least the one or more sets of rules, a relationship between the one or more sets of rules, and a selected format; and
output at least a portion of the one or more sets of formatted rules to an aircraft maintenance system, the aircraft maintenance system being operated based on at least the portion of the one or more sets of formatted rules.

2. The configuration generation system (100) of claim 1, wherein the one or more sets of formatted rules include at least one of:
a process for monitoring a condition in the system;
a process for isolating a fault in the system;
a process for diagnosing a fault in the system;
a process for reporting a fault in the system; and
a process for interfacing with the system.

3. The configuration generation system (100) of any preceding claim, wherein the aircraft maintenance system includes at least one of:
an on-board aircraft maintenance system; and
an off-board aircraft maintenance system.

4. The configuration generation system (100) of any preceding claim, wherein the operation of at least the portion of the system is related to at least one of:
fault isolation;
maintenance;
interface control;
requirements;
design;
reliability analysis; and
failure mode effect and criticality analysis (FMECA).

5. The configuration generation system (100) of any preceding claim, wherein the selected format is based on at least one of:
the text;
user input;
historical information; and
machine-readable information.

6. The configuration generation system (100) of any preceding claim, wherein the machine-readable instructions further include instructions that when executed by the processor (210) cause the processor (210) to:
select the portion of the one or more sets of formatted rules based on predetermined criteria.

7. The configuration generation system (100) of any preceding claim, wherein the portion of the one or more sets of formatted rules includes one or more previously processed sets of rules.

8. A method (300) comprising:
receiving (310) text from one or more sources, each of the one or more sources describing operation of at least a portion of a system;
generating (320), using at least one natural language processing model, one or more sets of rules based on the text;
generating (330), using at least one generative model, one or more formatted sets of rules based on at least the one or more sets of rules and a selected format; and
outputting (340) at least a portion of the one or more formatted sets of rules.

9. The method (300) of claim 8, wherein the one or more formatted sets of rules include at least one of:
a process for monitoring a condition in the system;
a process for isolating a fault in the system;
a process for diagnosing a fault in the system;
a process for reporting a fault in the system; and
a process for interfacing with the system.

10. The method (300) of any of claims 8-9, wherein the aircraft maintenance system includes at least one of:
an on-board aircraft maintenance system; and
an off-board aircraft maintenance system.

11. The method (300) of any of claims 8 - 10, wherein the operation of at least the portion of the system is related to at least one of:
fault isolation;
maintenance;
interface control;
requirements;
design;
reliability analysis; and
failure mode effect and criticality analysis (FMECA).

12. The method (300) of any of claims 8 - 11, wherein the selected format is based on at least one of:
the text;
user input;
historical information; and
machine-readable information.

13. The method (300) of any of claims 8 - 12, further comprising:
selecting the portion of the one or more formatted sets of rules based on predetermined criteria.

14. The method (300) of any of claims 8 - 13, wherein the portion of the one or more formatted sets of rules includes one or more previously processed sets of rules.

15. A non-transitory computer-readable medium including instructions that when executed by a processor cause the processor to execute the method (300) of any of claims 8-14.
